# EUROPEAN PATENT APPLICATION

(11) **EP 4 166 284 A1**
(43) Date of publication of application: **19.04.2023**
(21) Application number: 20942408.4
(22) Date of filing: 13.08.2020
(51) Int. Cl.: B25J 11/00, A01K 5/00

(54) **MATERIAL PUSHING ROBOT, MATERIAL PUSHING SYSTEM, AND MATERIAL PUSHING MANAGEMENT METHOD**

(30) Priority: 23.06.2020 CN 202010581049
(71) Applicant: FJ Dynamics Co., Ltd., Shenzhen, Guangdong 518054 (CN)
(72) Inventor: WU, Di, Shenzhen, Guangdong 518054 (CN); ZHAO, Wenquan, Shenzhen, Guangdong 518054 (CN); CHEN, Liang, Shenzhen, Guangdong 518054 (CN); YANG, Zhi, Shenzhen, Guangdong 518054 (CN); YAO, Yuan, Shenzhen, Guangdong 518054 (CN)
(74) Representative: Zaboliene, Reda
(86) International application number: PCT/CN2020/108920
(87) International publication number: WO 2021/258521

(57) **Abstract**

Disclosed are a material pushing robot (1), a material pushing system, and a material pushing management method. The material pushing system comprises at least one material pushing robot (1), at least one energy charging device (2) and a management unit (3), wherein the management unit (3) comprises a detection module (301), a processing module (302) and a control module (303); the processing module (302) is communicatively connected to the detection module (301) and the control module (303); the material pushing robot (1) and the energy charging device (2) are controllably connected to the management unit (3) respectively; when the material pushing robot (1) needs to be subjected to energy charging, the detection module (301) detects surrounding environment information so as to acquire at least one visual identifier (S); the processing module (302) generates a navigation instruction on the basis of the visual identifier (S) and sends the navigation instruction to the control module (303); and the control module (303) controls, on the basis of the navigation instruction, the material pushing robot (1) and the energy charging device (2) to meet, so as to charge energy for the material pushing robot (1).

## Description

### TECHNICAL FIELD

The present disclosure relates to agriculture field, in particular to a material pushing robot, a material pushing system, and a material pushing management method.

### BACKGROUND

Recently, the needs of agriculture technology developing and industry upgrading, scale and automation are becoming important. When domestic animals are eating, forage is placed outside a handrail, the animals are kept inside the handrail, so that excreta of the animals can be prevented from polluting the forage on one hand, and inside the farm can be kept clean on the other hand.

As the domestic animals are eating, the animals may move heads to eat the forage. During the process, the forage may be pushed away from the handrail. That is to say, after a time period of the animals eating, the forage may be pushed so away from the animals that the animals cannot reach the forage any more.

During traditional feeding process, famer needs to keep pushing the forage towards the handrail to continue feeding the animals. In a background of an automatic feeding, the famer may finish this job using a material pushing robot. The material pushing robot may automatically push the forage to the animals by automatic navigation technology.

For convenient operation, the material pushing robot may include an energy storage device, when the electric power runs out, the material pushing robot may moves to a charging pile for charging. The material pushing robot can automatically move back to the charging pile for charging. In the present technology, magnetic navigating elements, such as magnetic stripes or magnetic nails, are arranged in an operation area of the material pushing robot. The material pushing robot is arranged with magnetic sensors, through the magnetic sensors and the magnetic navigating elements, the material pushing robot may moves to the charging pile for charging. However, cost in operating the magnetic sensors and the magnetic navigating elements, and also the maintains in later period, especially when the operation area of the farm is far away from the charging pile, charging by this way is highly cost.

### SUMMARY OF THE INVENTION

One of the main advantages of the present disclosure is to provide a material pushing robot, a material pushing system, and a material pushing management method, wherein the material pushing robot can move back to a charging device for being charged, the material pushing robot can automatically move based on visual navigation.

One of the main advantages of the present disclosure is to provide a material pushing robot, a material pushing system, and a material pushing management method, wherein the material pushing robot can obtain a visual identifier arranged in a moving direction to achieve automatic navigation from an operating area to the charging device.

One of the main advantages of the present disclosure is to provide a material pushing robot, a material pushing system, and a material pushing management method, wherein the material pushing robot can continuously operates unmanned, accomplish automatic material pushing, automatic charging, and/or automatic return.

One of the main advantages of the present disclosure is to provide a material pushing robot, a material pushing system, and a material pushing management method, wherein the material pushing robot can move to the charging device in advantage before running out of power, to prevent a situation of running out of power when seeking the charging device, so as to improve a reliability of the operation of the material pushing robot.

One of the main advantages of the present disclosure is to provide a material pushing robot, a material pushing system, and a material pushing management method, wherein the material pushing robot can automatically return to previous position before charging for continuously operating.

One of the main advantages of the present disclosure is to provide a material pushing robot, a material pushing system, and a material pushing management method, wherein the

One of the main advantages of the present disclosure is to provide a material pushing robot, a material pushing system, and a material pushing management method, wherein the material pushing robot can be automatically charged when in operation, a charging device automatically finds the material pushing robot needs to be charged, to charge the material pushing robot.

One of the main advantages of the present disclosure is to provide a material pushing robot, a material pushing system, and a material pushing management method, wherein when one material pushing robot runs out of power, another material pushing robot can replace for operating, so the animals can continuously eat. In other words, two material pushing robots can continuously operate, to ensure material pushing efficiency and allow the animals continuously eat.

On one hand of the present disclosure, a material pushing management method includes:

when a material pushing robot in an operating area needs to be charged with electric energy, obtaining at least one visual identifier in surrounding environment by at least one visual sensor, to generate a navigation instruction; and

based on the navigation instruction, controlling the material pushing robot to meet a charging device, to charge the material pushing robot by the charging device.

On another hand of the present disclosure, a material pushing robot being capable of being charged with electric energy by a charging device, the material pushing robot includes:
a material pushing body; and
a charging navigation device, the charging navigation device includes:
at least one visual sensor;
a processor; and
a controller, wherein the visual sensor is arranged on the material pushing body, the visual sensor is communicatively connected to the processor, the processor is communicatively connected to the controller, when the material pushing body needs to be charged with electric energy, the visual sensor obtains surrounding environment information in a moving direction of the material pushing body, the surrounding environment information comprises at least one visual identifier, the processor, based on the visual identifier obtained by the processor, generates a navigation instruction and transmits the navigation instruction to the controller, the controller, based on the navigation instruction, controls the material pushing body to navigate the material pushing body to the charging device.

On another hand of the present disclosure, a material pushing system includes:
at least one material pushing robot;
at least one charging device; and
a management unit, wherein the management unit includes a detection module, a processing module, and a control module, the processing module is communicatively connected to the detection module and the control module, the material pushing robot and the charging device are controllably connected to the management unit, respectively; when the material pushing robot needs to be charged with electric energy, the detection module detects surrounding environment information so as to obtain at least one visual identifier; the processing module, based on the visual identifier, generates a navigation instruction and transmits the navigation instruction to the control module; and the control module controls, based on the navigation instruction, controls the material pushing robot and the energy charging device to meet, so as to charge the material pushing robot with electric energy.

### BRIEF DESCRIPTION OF THE DRAWINGS

FIG. 1 is a schematic diagram of a material pushing robot according to an embodiment of the present disclosure.
FIG. 2A is an explored diagram of the material pushing robot according to the embodiment of the present disclosure.
FIG. 2B is a functional block diagram of the material pushing robot according to the embodiment of the present disclosure.
FIG. 3A is a state of application of the material pushing robot according to the embodiment of the present disclosure.
FIG. 3B is another state of application of the material pushing robot according to the embodiment of the present disclosure.
FIG. 3C is yet another state of application of the material pushing robot according to the embodiment of the present disclosure.
FIG. 4 is an operating flowchart of the material pushing robot according to the embodiment of the present disclosure.
FIG. 5 is an operating flowchart of the material pushing robot according to the embodiment of the present disclosure.
FIG. 6 is a schematic diagram of a material pushing system according to an embodiment of the present disclosure.
FIG. 7A is a state of application of the material pushing system according to the embodiment of the present disclosure.
FIG. 7B is another state of application of the material pushing system according to the embodiment of the present disclosure.
FIG. 8A is yet another state of application of the material pushing system according to the embodiment of the present disclosure.
FIG. 8B is yet another state of application of the material pushing system according to the embodiment of the present disclosure.
FIG. 9 is yet another state of application of the material pushing system according to the embodiment of the present disclosure.
FIG. 10 is a schematic diagram of a material pushing equipment according to an embodiment of the present disclosure.
FIGS. 11A and 11B are schematic diagrams of the material pushing equipment shown in FIG. 10 in different status, showing a relationship between a material pushing machine and a charging device of the material pushing equipment.
FIGS. 12A and 12B are schematic diagrams of the material pushing machine of the material pushing equipment shown in FIG. 10, but viewed in different angles.
FIG. 13 is an exploded diagram of the material pushing machine of the material pushing equipment shown in FIG. 10, showing a structural relationship of a walking device and a material pushing device.
FIG. 14 is a partial schematic diagram of the material pushing machine of the material pushing equipment shown in FIG. 10, showing a structural relationship of the walking device and a material pushing wall of the material pushing device.
FIG. 15 is a partial explored schematic diagram of the material pushing machine of the material pushing equipment shown in FIG. 10, showing structural relationships of the material pushing wall and other components.
FIG. 16 is a partial schematic diagram of the material pushing machine of the material pushing equipment shown in FIG. 10, showing structural relationships of the walking device and other components.
FIGS. 17A and 17B are schematic diagrams of the material pushing machine of the material pushing equipment shown in FIG. 10, but viewed in different angles, showing structural relationships of the walking device and other components.

### DETAILED DESCRIPTION

The following description is used to disclose the present disclosure so that those skilled in the art can implement the present disclosure. The preferred embodiments in the following description are only examples, and those skilled in the art can think of other obvious variations. The basic principles of the present disclosure defined in the following description can be applied to other embodiments, modifications, improvements, equivalents, and other technical solutions that do not depart from the spirit and scope of the present disclosure.

Those skilled in the art should understand that, in the disclosure of the present disclosure, the terms "longitudinal", "lateral", "upper", "lower", "front", "rear", "left", "right", the orientation or positional relationship indicated by "vertical", "horizontal", "top", "bottom", "inner", "outer", etc. are based on the orientation or positional relationship shown in the drawings, which is only for the convenience of describing the present disclosure and to simplify the description, rather than indicating or implying that the device or element referred to must have a specific orientation, or be constructed and operated in a specific orientation, so the above terms should not be understood as limiting the present disclosure.

It can be understood that the term "a" should be understood as "at least one" or "one or more", that is, in one embodiment, the number of an element may be one, and in another embodiment, the number of the elements can be more than one, and the term "one" cannot be taken as a restriction on the number.

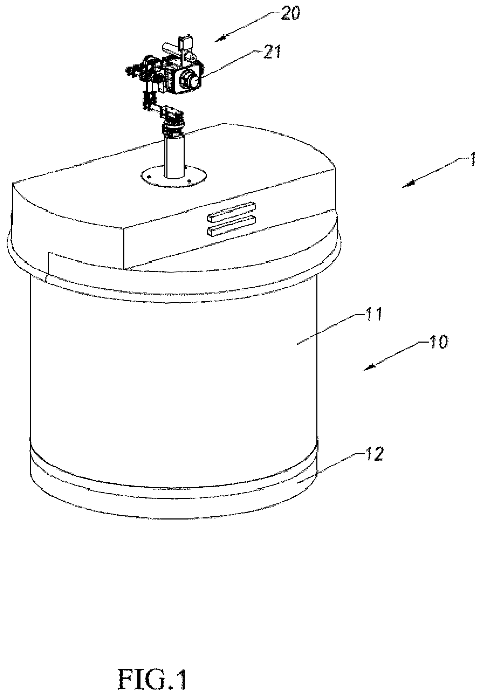

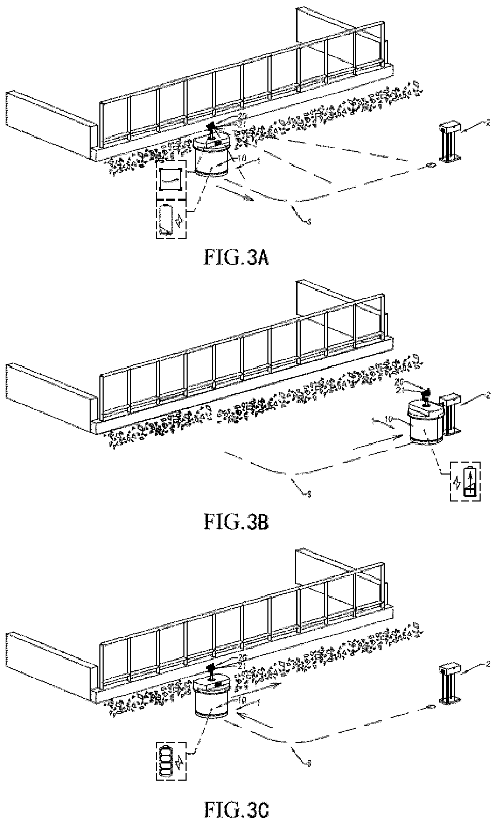

Referring to FIG. 1 to FIG. 3C of the accompanying drawings of the specification of the present disclosure, a material pushing robot 1 according to an embodiment of the present disclosure is explained in the following description.

The material pushing robot 1 may automatically push the forage in an operation area for keeping feeding animals. When the material pushing robot 1 needs to be charged with electric energy, the material pushing robot 1 can be automatically charged. Thus, during the whole material pushing operating process, little human operation is needed, which can improve production efficiency.

In detail, the material pushing robot 1 includes a material pushing body 10 and a charging navigation device 20. The charging navigation device 20 is arranged on the material pushing body 10. The material pushing body 10 is configured to push materials. The charging navigation device 20 is configured to charge the material pushing body 10 with electric energy.

In detail, the material pushing body 10 includes a material pushing device 11 and a moving device 12. The moving device 12 is arranged on the material pushing device 11 for driving the material pushing device 11. The material pushing device 11 is configured to push the forage. The moving device 12 is configured to move along an operating surface. The charging navigation device 20 may navigate the moving device 12.

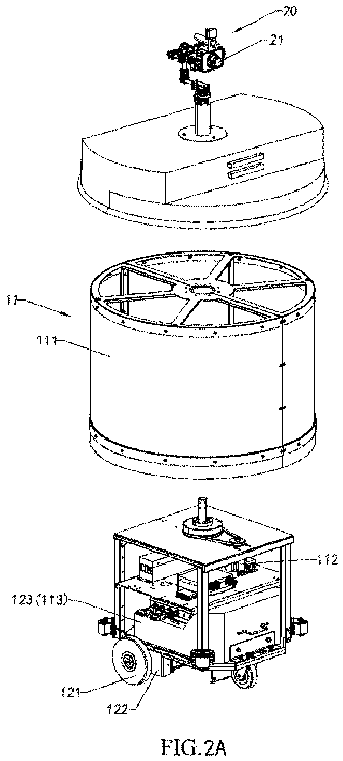

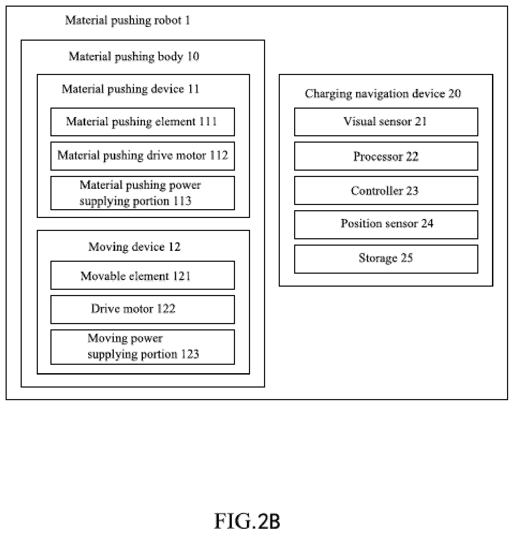

Referring to FIGS. 2A and 2B, the moving device 12 may include a movable element 121, a drive motor 122, and a moving power supplying portion 123. The moving power supplying portion 123 is configured to supply power for the drive motor 122, the movable element 121 is drivable and connected to the drive motor 122. Moving modes for the movable element 121 may be multiple, such as the movable element 121 can be a roller, a turntable, or a belt.

The material pushing device 11 may include a material pushing element 111, a material pushing drive motor 112, and a material pushing power supplying portion 113. The material pushing element 111 is configured to push the forage. The material pushing power supplying portion 113 is configured to supply power for the material pushing drive motor 112. The material pushing element 111 is drivable and connected to the material pushing drive motor 112.

It should be known that, the moving device 12 and the material pushing device 11 may share a motor or a power supplying portion. For instance, referring to FIGS. 2A and 2B, the material pushing power supplying portion 113 of the material pushing device 11 and the moving power supplying portion 123 of the moving device 12 may be a same power supplying portion.

The charging navigation device 20 of the material pushing robot 1 includes at least one visual sensor 21, a processor 22, and a controller 23. The moving device 12 and the material pushing device 11 are controllable and connected to the controller 23, respectively. The processor 22 is communicatively connected to the controller 23. The visual sensor 21 is arranged on the material pushing body 10 for obtain surrounding environment information when the material pushing body 10 is moving. The processor 22, based on the information obtained by the visual sensor 21, obtains a navigation path and transmits the navigation path to the controller 23. The controller 23, based on the navigation path, controls the material pushing body 10 to move along the navigation path.

The material pushing body 10 is navigated to a changing device 2 in the navigation of the charging navigation device 20. The changing device 2 can be a charging pile, a charging base, or a charging case. The changing device 2 can be a fixed device or a movable device.

When the material pushing robot 1 moves to a charging area of the charging device 2, the changing device 2 can charge the material pushing robot 1 with electric energy. It should be mentioned that, a charging way of the changing device 2 can be wireless charging or charging in cable.

In detail, in the operating area of the farm or a pasture, the material pushing robot 1 is positioned in the operating area. The operating area or surrounding of the operating area is arranged with handrails, the animals are kept on a side of the handrails, the forage is on another side of the handrails. The material pushing robot 1 and the forage are on a same side of the handrails.

Animals are kept along the handrails, a shape of the handrails can be multiple, such as straight line or curve. In the present embodiment, the handrails are straight line in shaped for further description. The forage is arranged along the handrails for being reached by heads of the animals extending through the handrails.

When times move on, the heads of the animals may push the forage away from the handrails, so the distance between the forage and the handrails becomes greater. The material pushing robot 1 is outside the handrails, which may push the forage along the handrails to original positions or positions can be reached by the animals.

It should be known that, the navigation mode during the material pushing process of the material pushing robot 1 can be multiple, which may include operating along an arranged path or in an automatically searching path. In other words, during the operation of the material pushing robot 1, it can be patrol navigation or non-patrol navigation.

When the material pushing body 10 is running out of electric energy, the processor 22 of the charging navigation device 20, based on surrounding identifications detected by the visual sensor 21, generates the navigation path. The controller 23, based on the processor 22, controls the material pushing body 10 to move towards the charging device 2 along the navigation path.

It should be known that, when the material pushing body 10 runs out of electric energy, the charging navigation device 20 may receive a signal and start to work, that is, the charging navigation device 20 may always in an operating status.

There is a predetermined distance between the operating area and the charging device 2, and there is a predetermined path between the operating area and the charging device 2, the predetermined path can be a tangible path, which can be formed by painting on the operating surface or sticking visual identifier S. The predetermined path can be visually captured by the visual sensor 21 of the charging navigation device 20.

It should be known that, the predetermined path can be a continuous path or a discontinuous path. For instance, arranging a plurality of visual identifiers S between the operating are and the charging device 2. Along the plurality of visual identifiers S, the material pushing robot 1 can move from an operating position of the operating area to the position of the charging device 2.

In the present embodiment, the predetermined path can be a yellow full line. By this way, the user may not need to arrange the traditional magnetic path for charging the material pushing robot 1. The arrangement of the visual identifiers S is simple and low cost, only the user dyes the predetermined area. In addition, the material pushing robot 1 in the action of the visual identifiers S, through the visual sensor 21, can conveniently find the charging device 2 without any complicated visual calculation.

Furthermore, when the material pushing robot 1 moves close to the charging device 2 and finishes the charging, the material pushing robot 1 can automatically go back to the previous position for continuously operating.

In detail, the charging navigation device 20 of the material pushing robot 1 further includes a position sensor 24 and a storage 25. The position sensor 24 and the storage 25 are communicatively connected to the processor 22. The position sensor 24 is configured to obtain position information of the material pushing body 10. The storage 25 is communicatively connected to the position sensor 24. The storage 25 is configured to store the position information of the material pushing body 10.

After the material pushing robot 1 finishes charging, the visual sensor 21 of the charging navigation device 20 can move to identify the visual identifiers S, then the processor 22, based on the information obtained by the visual sensor 21, generates the predetermined path, the controller 23 controls the material pushing body 10 back to the previous position for restarting the operation.

It should be noticed that, the visual sensor 21 is rotatably connected to the material pushing body 10 for conveniently obtaining surrounding environment information of the material pushing body 10 and identifying the visual identifiers S arranged around the material pushing body 10. For instance, the visual sensor 21 can rotate related to an X-axis, a Y-axis, or a Z-axis. The visual sensor 21 can be mounted on the material pushing body 10 through a holder. Or, the material pushing body 10 can be rotatable, the visual sensor 21 mounted on the material pushing body 10 can enlarge a detection range along with the rotation or movement of the material pushing body 10.

Furthermore, there can be a plurality of visual identifiers S, which are different, such as a stop identifier is arranged in a position closes to the charging device 2. When the charging device 2 identifies the stop identifier, the processor 22 generates a signal and transmits to the controller 23, the controller 23 controls the material pushing body 10 to stop.

An area arranged with the visual identifiers S can be the patrol area. During the movement process of the material pushing body 10, the visual sensor 21 of the charging navigation device 20 can collect road condition information of a forward direction of the material pushing body 10 in real time. When the material pushing body 10 enters the non-patrol area, the non-patrol area can be arranged with the stop identifiers, for the material pushing robot 1 can stop moving or switch to other navigation modes.

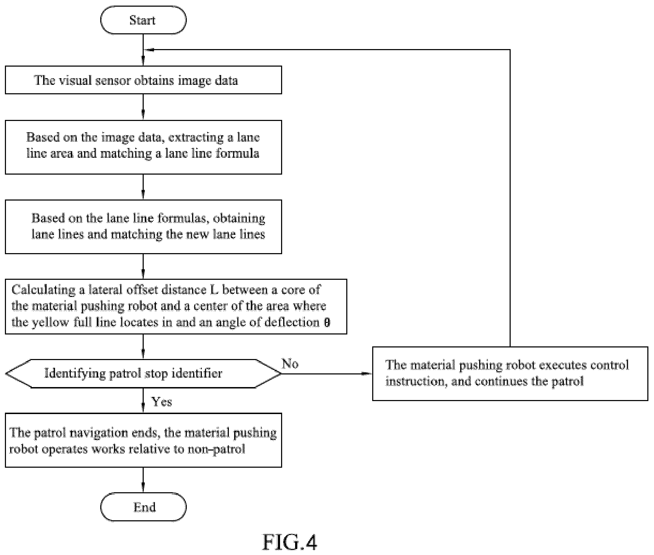

The material pushing robot 1 can move in the patrol area based on the visual identifiers S to nearby of the charging device 2 for changing, a specific flowchart can be referred to FIG. 4.

Firstly, arranging a yellow full line between the operating area to the charging device 2 as the navigation path, a width of the yellow full line can be 10 cm - 20 cm. It should be known by one ordinary skill in the art that, the color and shape of the full line are optional according to requirements.

Secondly, when the material pushing robot 1 needs to be charged, the visual sensor 21 of the charging navigation device 20 detects surrounding environment information of the material pushing body 10 in real time to obtain image data Img, and transmits the image to the processor 22. The processor 22 can extract the visual identifier S according to factors such as color, variance, length-width ratio, and size, etc. In the present embodiment, it's the yellow full line. Based on the visual identifier S, generating a navigation instruction, such as the navigation instruction may include matching to obtain the navigation path, or a steering angle, for controlling the material pushing robot 1 in real time.

In detail, the visual sensor 21 obtains the image in real time, the processor 22 generates a lane line formula in real time. Along with the movement of the material pushing body 10, a plurality of lane line formulas are generated, the processor 22, based on the lane line formulas, obtains lane lines and matches the lane lines, such as calculating a lateral offset distance L between a core of the material pushing robot 1 and a center of the area where the yellow full line locates in and an angle of deflection *θ*.

Last but not the least, when the visual sensor 21 of the material pushing robot 1 identifies the stop identifier, the patrol navigation of the material pushing robot 1 ends. The material pushing robot 1 may operate works relative to non-patrol, such as parking close to the charging device 2 for charging. If the material pushing robot 1 does not detect the stop identifier, the material pushing robot 1 keeps moving along the patrol, until identifying the stop identifier or detecting the charging device 2.

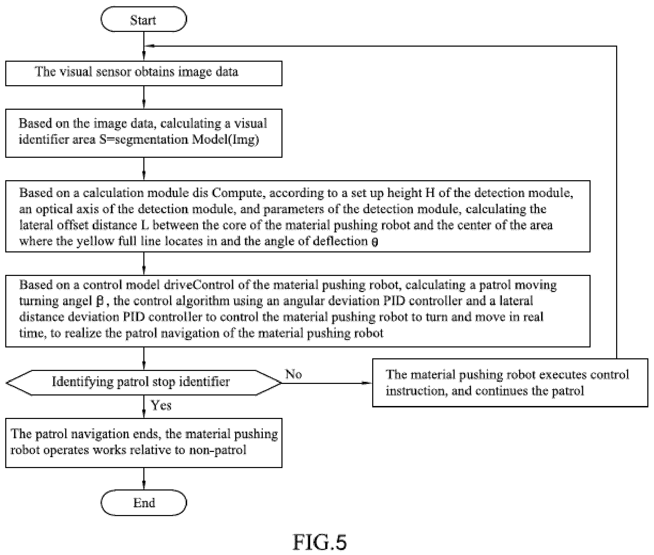

Referring to FIG. 5, a flowchart of the material pushing robot 1 according to the embodiment of the present disclosure is presented.

Firstly, between the operating area and the charging device 2, the visual identifier S can be arranged on the yellow full line on the ground. It should be known that, the visual identifier S can be on the ground or stand on the ground.

Secondly, when the material pushing robot 1 needs to be charged, the visual sensor 21 obtains surrounding environment information in the moving direction in real time, to obtain the image data Img. According to an image segmentation Model, calculating the yellow full area S=segmentation Model(Img). Based on a calculation module dis Compute, according to a set up height H of the visual sensor 21, an optical axis of the visual sensor 21, and parameters of the visual sensor 21, calculating the lateral offset distance L between the core of the material pushing robot 1 and the center of the area where the yellow full line locates in and the angle of deflection *θ*.

Then, based on a control model driveControl of the material pushing robot 1, calculating a patrol moving turning angel *β*, the control algorithm using an angular deviation PID controller and a lateral distance deviation PID controller to control the material pushing robot 1 to turn and move in real time, to realize the patrol navigation of the material pushing robot 1.

Last but not the least, when the visual sensor 21 of the material pushing robot 1 identifies the stop identifier, the patrol navigation of the material pushing robot 1 ends. The material pushing robot 1 may operate works relative to non-patrol, such as parking close to the charging device 2 for charging. If the material pushing robot 1 does not detect the visual sensor 21, the material pushing robot 1 keeps moving along the patrol, until identifying the stop identifier or detecting the charging device 2.

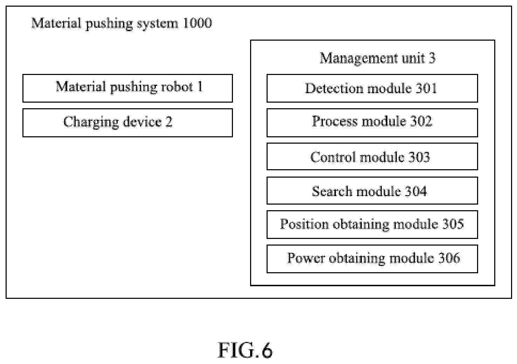

Referring to FIG. 6, a schematic diagram of a material pushing system 1000 according to an embodiment of the present disclosure is presented.

The material pushing system 1000 includes at least one material pushing robot 1, at least one charging device 2, and a management unit 3. The at least one material pushing robot 1 and the at least one charging device 2 can be managed by the management unit 3, respectively.

The management unit 3 may include a detection module 301, a processing module 302, and a control module 303. The detection module 301 is communicatively connected to the processing module 302, the processing module 302 is controllable and connected to the control module 303. The detection module 301 is arranged in the material pushing robot 1 and configured to obtain surrounding environment image information of the material pushing robot 1 during moving. The detection module 301 can be arranged in the charging device 2 and configured to obtain surrounding environment information of the charging device 2. The material pushing robot 1 and the charging device 2 can be controllable and connected to the control module 303.

The detection module 301 can be a detector or a sensor, the detection module 301 can be several detectors or several sensors. When the detection module 301 is the visual sensor 21, the detection module 301 can be a camera. It should be known that, the detection module 301 may not be the camera, but can be an infrared sensor or other types of wave sensors. The detection module 301 is configured to detect the visual identifier S in the surrounding environment.

Based on the data obtained by the detection module 301, the processing module 302 generates the navigation path, which can be referred to the flowcharts as shown in FIGS. 4 and 5.

A first optional flowchart of the material pushing system 1000 can be:
Firstly, arranging the yellow full line between the operating area and the charging device 2 as the navigation path, a width of the yellow full line can be 10cm - 20cm. It should be known by one ordinary skill in the art that, the color and shape of the full line are optional according to requirements.
Secondly, when the material pushing robot 1 needs to be charged, the detection module 301 of the management unit 3 detects surrounding environment information of the material pushing body 10 in real time to obtain image data Img, and transmits the image to the processing module 302. The processing module 302 can extract the visual identifier S according to factors such as color, variance, length-width ratio, and size, etc. In the present embodiment, it's the yellow full line. Based on the visual identifier S, matching to obtain the navigation path.

In detail, the detection module 301 obtains the image in real time, the processing module 302 generates a lane line formula in real time. Along with the movement of the material pushing robot 1, a plurality of lane line formulas are generated, the processing module 302, based on the lane line formulas, obtains new lane lines and matches the lane lines, such as calculating a lateral offset distance L between a core of the material pushing robot 1 and a center of the area where the yellow full line locates in and an angle of deflection *θ*.

Last but not the least, when the detection module 301 identifies the stop identifier, the patrol navigation of the material pushing robot 1 ends. The material pushing robot 1 may operate works relative to non-patrol, such as parking close to the charging device 2 for charging. If the detection module 301 does not detect the stop identifier, the material pushing robot 1 keeps moving along the patrol, until identifying the stop identifier or detecting the charging device 2.

A second optional flowchart of the material pushing system 1000 can be:
Firstly, between the operating area and the charging device 2, the visual identifier S can be arranged on the yellow full line on the ground. It should be known that, the visual identifier S can be on the ground or stand on the ground.
Secondly, when the material pushing robot 1 needs to be charged, the detection module 301 obtains surrounding environment information in the moving direction in real time, to obtain the image data Img. According to an image segmentation Model, calculating the yellow full area S=segmentation Model(Img). Based on a calculation module dis Compute, according to a set up height H of the detection module 301, an optical axis of the detection module 301, and parameters of the detection module 301, calculating the lateral offset distance L between the core of the material pushing robot 1 and the center of the area where the yellow full line locates in and the angle of deflection *θ*.

Then, based on a control model driveControl of the material pushing robot 1, calculating a patrol moving turning angel *β*, the control algorithm using an angular deviation PID controller and a lateral distance deviation PID controller to control the material pushing robot 1 to turn and move in real time, to realize the patrol navigation of the material pushing robot 1.

Last but not the least, when the detection module 301 of the material pushing robot 1 identifies the stop identifier, the patrol navigation of the material pushing robot 1 ends. The material pushing robot 1 may operate works relative to non-patrol, such as parking close to the charging device 2 for charging. If the material pushing robot 1 does not detect the detection module 301, the material pushing robot 1 keeps moving along the patrol, until identifying the stop identifier or detecting the charging device 2.

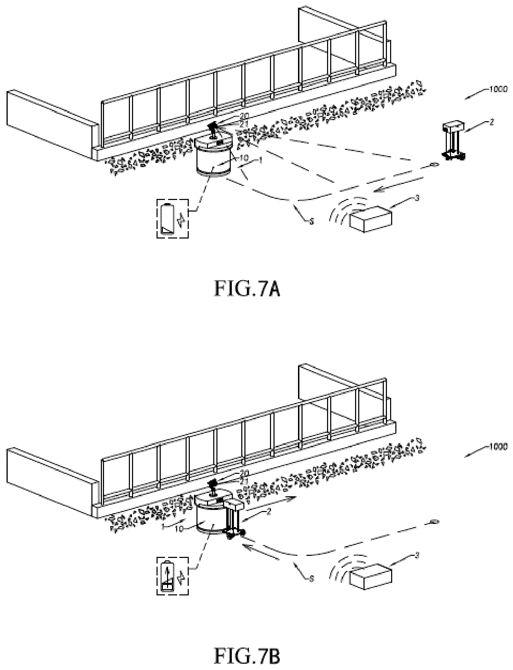

Referring to FIGS. 7A and 7B, meanwhile referring to FIGS. 2 and 6, an application scene of the material pushing system 1000 according to an embodiment of the present disclosure is presented.

In the present embodiment, the detection module 301 of the management unit 3 of the material pushing system 1000 is arranged in the material pushing robot 1.

In the present embodiment, the detection module 301 of the management unit 3 of the material pushing system 1000 is arranged in the charging device 2. The charging device 2 is configured as movable.

When one of the material pushing robot 1 of the material pushing system 1000 needs to be charged, the management unit 3 controls one charging device 2 to move close to the material pushing robot 1 that needs to be charged, so the material pushing robot 1 can be changed.

In other words, in the present embodiment, the material pushing robot 1 does not need to move towards the charging device 2, but the charging device 2 moves towards the material pushing robot 1.

In detail, when the material pushing robot 1 needs to be charged, the detection module 301 arranged on the charging device 2 detects surrounding environment of the charging device 2, to obtain the visual identifier S. The processing module 302, based on the visual identifier S, generates the navigation path and transmits the navigation path to the control module 303. The control module 303 controls the charging device 2 to move along the navigation path to the position of the material pushing robot 1.

It should be known that, the detection module 301 obtains data in real time, the processing module 302 generates the navigation path in real time.

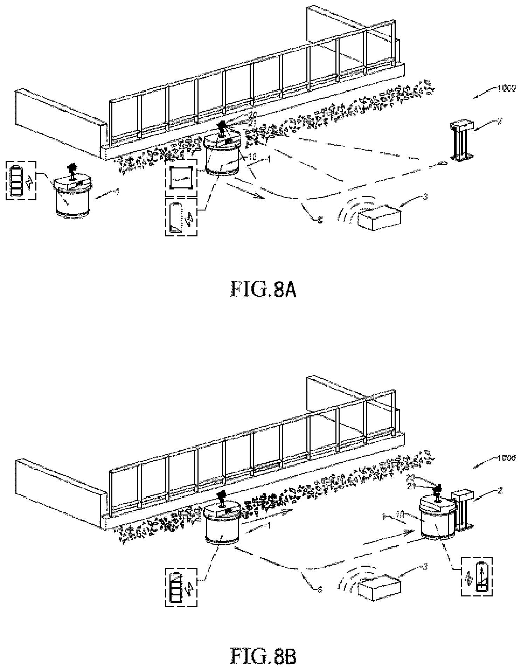

Referring to FIGS. 8A and 8B, meanwhile referring to FIGS. 2 and 6, another application scene of the material pushing system 1000 according to an embodiment of the present disclosure is presented.

In the present embodiment, there are two or more material pushing robots 1 in the material pushing system 1000. The management unit 3 of the material pushing system 1000 includes a search module 304, the search module 304 can be communicatively connected to the processing module 302. The search module 304 is configured to search the material pushing robot 1.

When the material pushing robot 1 in operation needs to be charged, the search module 304 of the material pushing system 1000 searches surrounding available material pushing robots 1, the processing module 302, based on the search result of the search module 304, determines a material pushing robot 1 and transmits a signal to the control module 303. The control module 303 controls the determined material pushing robot 1 to move to the position of the previous material pushing robot 1 to keep operating.

By this way, the material pushing operation of the material pushing system 1000 can be continuous.

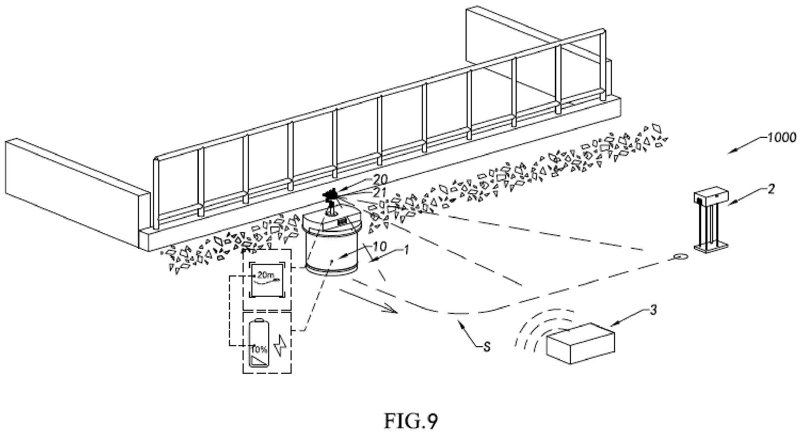

Referring to FIG. 9, another application scene of the material pushing system 1000 according to an embodiment of the present disclosure is presented.

In the present embodiment, the management unit 3 of the material pushing system 1000 may obtain a distance between the material pushing robot 1 in operation and the charging device 2, and before a remaining power of the material pushing robot 1 cannot support the material pushing robot 1 to move to the charging range of the charging device 2 in the shortest distance, control the material pushing robot 1 to move towards the charging device 2, to prevent a situation of the material pushing robot 1 powering off during the trip.

In detail, the management unit 3 includes a position obtaining module 305 and a power obtaining module 306. The position obtaining module 305 is configured to obtain a position of the material pushing robot 1 and a position of the charging device 2. The power obtaining module 306 is configured to obtain the remaining power of the material pushing robot 1.

The position obtaining module 305 and the power obtaining module 306 are communicatively connected to the process unit. The processing module 302 determines the remaining power supporting movable distance s1 is greater than a distance s2 between the present position of the material pushing robot 1 and the charging device 2 is less a predetermined range Δs, that is, when s1-s2<Δs, the control module 303 of the management unit 3 controls the material pushing robot 1 to stop operating and move towards the charging device2 for being charging. The detection module 301 may detect surrounding environment of the material pushing robot 1, the processing module 302, based on the detected data of the detection module 301, obtains the visual identifier S and generates the navigation path, to navigate the material pushing robot 1 in real time. The control module 303, based on the navigation path, controls the material pushing robot 1.

On another hand of the present disclosure, a material pushing management method is provided, the material pushing management method includes follow steps:

When the material pushing robot 1 in the operating area needs to be charged, according to information obtained by a visual sensor 21, generating the navigation instruction; and

Navigating the material pushing robot 1 to meet the charging device 2 along the navigation path, so the charging device 2 charges the material pushing robot 1.

According to an embodiment of the present disclosure, in the material pushing management method, navigating the material pushing robot 1 to the charging range of the charging device 2 along the navigation path.

According to an embodiment of the present disclosure, in the material pushing management method, navigating the charging device 2 to move towards the material pushing robot 1 until the material pushing robot 1 is positioned in the charging range of the charging device 2.

According to an embodiment of the present disclosure, the material pushing management method further includes following steps:

When the material pushing robot 1 in operation in the operating area needs to be charged, obtaining the position of the material pushing robot 1; and

Driving another material pushing robot 1 to replace the previous material pushing robot 1 for operating, the previous material pushing robot 1 can be navigated to the charging device 2 for being charged.

According to an embodiment of the present disclosure, in the material pushing management method, according to at least one visual identifier S of the surrounding environment of the material pushing robot 1 obtained by the visual sensor 21, generating the navigation path.

According to an embodiment of the present disclosure, in the material pushing management method, the visual identifier S can be identifier lines arranged on the ground.

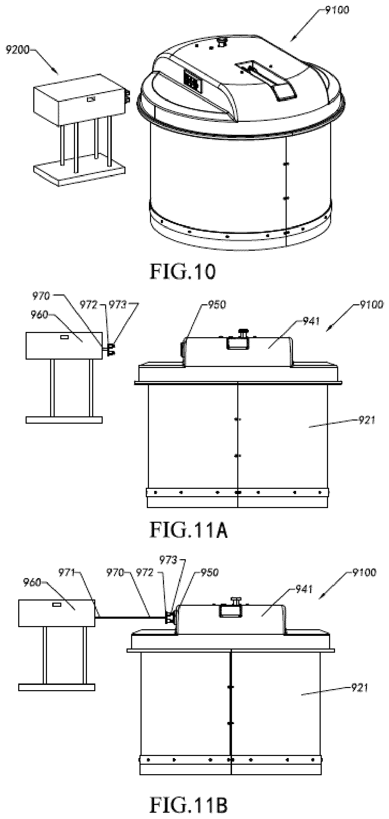

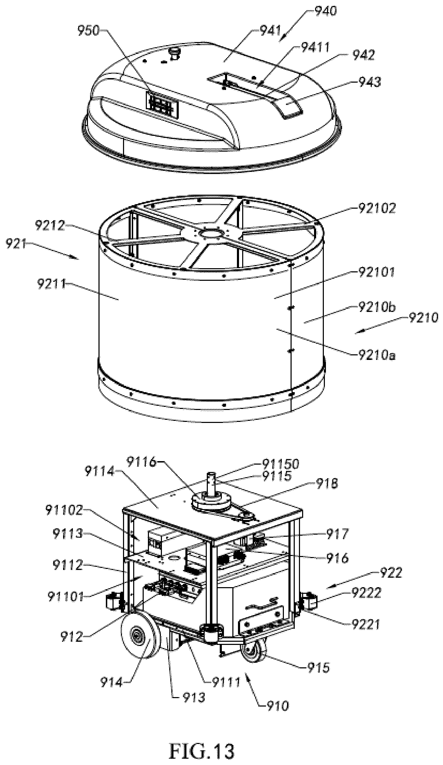

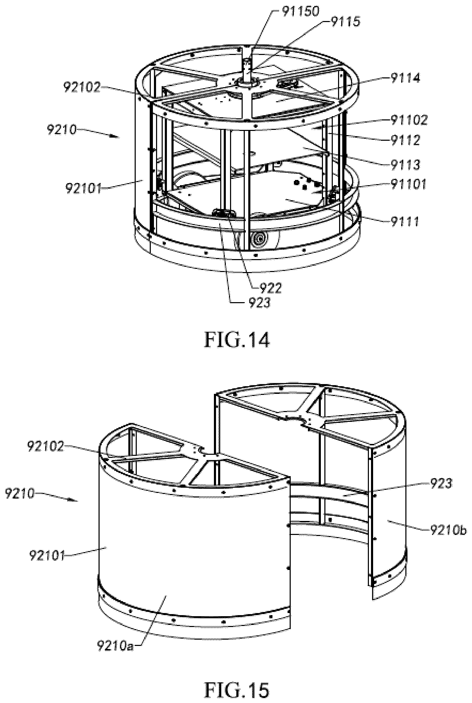

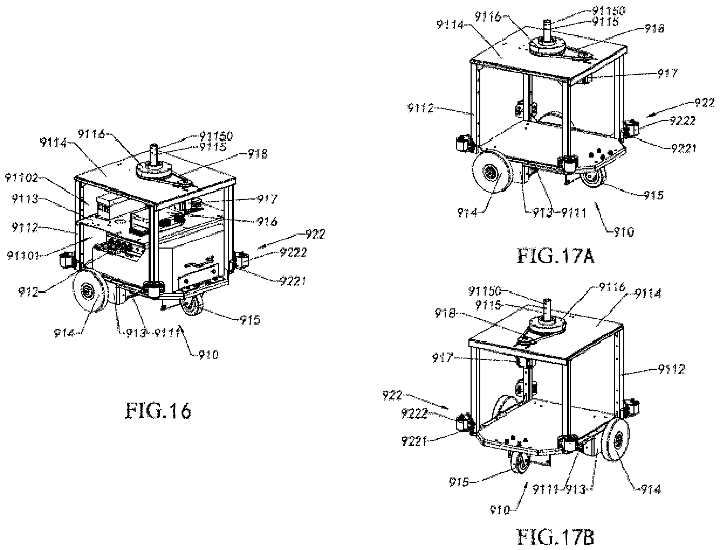

Referring to FIGS. 10 to 17B, a material pushing robot according to an embodiment of the present disclosure is presented and described. The material pushing robot includes a material pushing machine 9100 and a charger 9200. The charger 9200 can be electrically connected to a commercial power source and automatically provides electric power for the material pushing machine 9100. For instance, the charger 9200 can convert a voltage of the commercial power source into a voltage of the material pushing machine 9100, when the material pushing machine 9100 closes to the charger 9200, the material pushing machine 9100 can automatically matched to the charger 9200, so the charger 9200 provides electric power for the material pushing machine 9100.

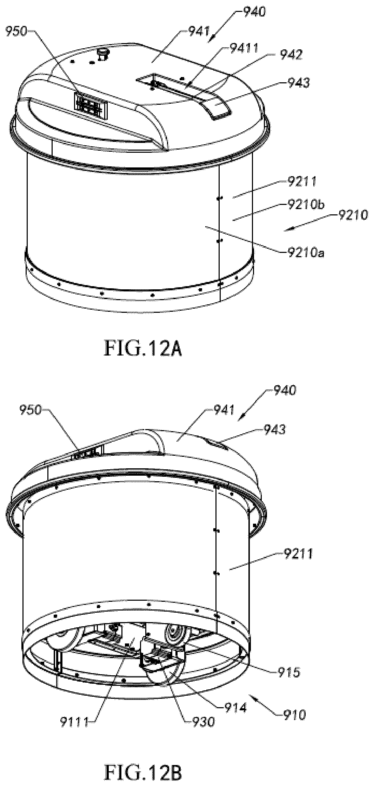

Referring to FIGS. 12A to 17B, the material pushing machine 9100 of the material pushing robot includes a walking device 910 and a material pushing device 920 arranged on the walking device 910.

In detail, the walking device 910 includes a holding assembly 911, a power supply assembly 912, two walking drive motors 913, two drive wheels 914, and a supporting wheel 915. The holding assembly 911 further includes a base plate 9111, the power supply assembly 912 is arranged on and supported by the base plate 9111, the charger 9200 may automatically supply power for the power supply assembly 912. The two walking drive motors 913 are arranged on opposite ends of the base plate 9111, each of the walking drive motors 913 is electrically connected to the power supply assembly 912. The two drive wheels 914 are connected to the walking drive motors 913, the two drive wheels 914 are arranged on opposite ends of the base plate 9111. The supporting wheel 915 is mounted in a middle of the base plate 9111 on other side, thus the two drive wheels 914 and the supporting wheel 915 form a triangular structure, the two drive wheels 914 and the supporting wheel 915 cooperatively support the base plate 9111 above the ground.

Preferably, the two drive wheels 914 are mounted on an output roller of the walking drive motors 913, thus the two drive wheels 914 may be connected to and driven by the walking drive motors 913. The supporting wheel 915 may be a universal wheel, for turning of the material pushing machine 9100 in any direction.

It should be known that, a shape of the base plate 9111 is not limited, as shown in FIGS. 12A to 17B, the base plate 9111 is substantially square, a center of gravity of the power supply assembly 912 coincides with a center of gravity of the base plate 9111 in height, thus preventing any decline of a center of gravity of the material pushing machine 9100, and ensuring a reliability and a stability of the material pushing machine 9100. Preferably, in other embodiments of the material pushing machine 9100, the base plate 9111 may be, but is not limited to, circular, elliptic, and polygonal.

The material pushing device 920 includes a material pushing wall 921, the material pushing wall 921 includes an annular wall body 9211 and a connecting arm 9212 extending from a top to a middle of the annular wall body 9211. The connecting arm 9212 is rotatably amounted on the holding assembly 911, the annular wall body 9211 rotatably surrounds the holding assembly 911, thus the material pushing wall 921 forms the exterior of the material pushing machine 9100. Thus, when the material pushing machine 9100 pushes the materials, forage or other food may not enter interior of the material pushing machine 9100, and the walking device 910 will not be affected. For instance, the forage may be straw or a mixture of straw and fodder, the straw is substantially long and thin, the material pushing wall 921 is arranged on outside of the holding assembly 911 and forms the appearance of the material pushing machine 9100, which may prevent the forage entering the internal of the material pushing machine 9100 and affecting the walking device 910, so as to ensure a reliability and a stability of the material pushing machine 9100.

In the material pushing machine 9100 of the present disclosure, when the power supply assembly 912 is controlled to provide power for each of the walking drive motors 913, each of the walking drive motors 913 may convert electric energy into kinetic energy to drive each of the drive wheels 914 to run, thus, the walking device 910 may walk or at least follow a path. It should be known that, when rotation speeds of the two walking drive motors 913 are the same, the walking device 910 is configured to walk straight along a path; when rotation speeds of the two walking drive motors 913 are different, the motion of the walking device 910 will be in a curve. For instance, when one of the walking drive motors 913 is rotating, and the other of the walking drive motors 913 is not working, the walking device 910 may make a sharp turn.

It should be mentioned that, a type of the power supply assembly 912 is not limited, such as the power supply assembly 912 may be a storage battery (such as but is not limited to lithium battery), when the electric energy stored in the power supply assembly 912 is consumed, the power supply assembly 912 will replenish electric energy. Or the power supply assembly 912 may include a storage battery (such as but is not limited to lithium battery), when the electric energy stored in the power supply assembly 912 is consumed, the power supply assembly 912 will replenish electric energy.

Furthermore, the walking device 910 includes a controller 916, the power supply assembly 912 and each of the walking drive motors 913 are connected to the controller 916, the controller 916 controls power supply ways of the power supply assembly 912 to the walking drive motors 913. Preferably, the controller 916 is arranged on and supported by the base plate 9111. Optionally, the controller 916 is arranged on the power supply assembly 912, or the controller 916 and the power supply assembly 912 are integrated.

It should be mentioned that, a type of the controller 916 is not limited, and may have a calculating function and a controlling function. For instance, the controller 916 may control a power from the power supply assembly 912 to each of the walking drive motors 913 according to a real-time status of the material pushing machine 9100, so as to adjust a walking or path of movement of the material pushing machine 9100.

Referring to FIGS. 12A to 17B, the holding assembly 911 includes at least two support columns 9112, a lower holding platform 9113, and an upper holding platform 9114. A lower end of each support column 9112 is arranged on edges of the base plate 9111 and extended from the edges of the base plate 9111 to a predetermined height. A periphery of the lower holding platform 9113 is arranged in a middle portion of each support column 9112, so each support column 9112 may support and maintain the lower holding platform 9113 on the base plate 9111, and a first receiving space 91101 of the holding assembly 911 is formed between the base plate 9111 and the lower holding platform 9113. A periphery of the upper holding platform 9114 is arranged in an upper portion of each support column 9112, so each support column 9112 may support and maintain the upper holding platform 9114 over the lower holding platform 9113, and a second receiving space 91102 of the holding assembly 911 is formed between the lower holding platform 9113 and the upper holding platform 9114.

In other words, the holding assembly 911 has the first receiving space 91101 and the second receiving space 91102. The first receiving space 91101 is formed between the base plate 9111 and the lower holding platform 9113, for receiving the power supply assembly 912 mounted on the base plate 9111. The second receiving space 91102 is formed between the lower holding platform 9113 and the upper holding platform 9114, for receiving the controller 916 mounted on the lower holding platform 9113. It should be known that, other electrical components (such as but is not limited to fuse, power manager, communication module) of the walking device 910 may also be received in the second receiving space 91102 and contained in the lower holding platform 9113.

Optionally, in other embodiment of the material pushing machine 9100, the holding assembly 911 has only one holding platform, the holding platform is arranged on an upper end of each support column 9112, a receiving space is formed between the base plate 9111 and the holding platform, the power supply assembly 912 and the controller 916 arranged on the base plate 9111 are received in the receiving space.

Particularly, the material pushing machine 9100 as shown in FIGS. 12A to 17B, the holding assembly 911 includes four support columns 9112, a lower end of each support column 9112 is arranged at a corner of the base plate 9111. Each corner of the lower holding platform 9113 is arranged at middle portion of each support column 9112, so each support column 9112 may maintain the lower holding platform 9113 above the base plate 9111, the first receiving space 91101 is formed between the base plate 9111 and the lower holding platform 9113. Each corner of the upper holding platform 9114 is at upper portion of each support column 9112, so each support column 9112 holds the upper holding platform 9114 above the lower holding platform 9113, the second receiving space 91102 is formed between the lower holding platform 9113 and the upper holding platform 9114.

Referring to FIGS. 12A to 17B, the holding assembly 911 further includes a mounting column 9115 and a drive ring 9116. The mounting column 9115 is arranged from a center position of the upper holding platform 9114 extending upwardly to form a free end 91150. The drive ring 9116 is rotatably mounted to a middle portion of the mounting column 9115.

It should be mentioned that, a manner of the mounting column 9115 being arranged on the upper holding platform 9114 is not limited, for instance, the mounting column 9115 and the upper holding platform 9114 may be integrally formed, or the mounting column 9115 is a screw joint to the upper holding platform 9114, or the mounting column 9115 is welded to the upper holding platform 9114.

It should be mentioned that, a manner of the drive ring 9116 being rotatably mounted to the mounting column 9115 is not limited, for instance, the drive ring 9116 is rotatably mounted to the mounting column 9115 through a bearing.

The walking device 910 further includes a material pushing drive motor 917. The material pushing drive motor 917 is arranged on the upper holding platform 9114 and electrically connected to the power supply assembly 912, when the power supply assembly 912 supplies power to the material pushing drive motor 917, the material pushing drive motor 917 may convert electric energy into kinetic energy. Preferably, the material pushing drive motor 917 is connected to the controller 916, so the controller 916 may control manner of supplying power to the material pushing drive motor 917. The drive ring 9116 is drivable and connected to the material pushing drive motor 917. The connecting arm 9212 of the material pushing wall 921 is extended to and fixedly amounted to the drive ring 9116. When the power supply assembly 912 supplies power to the material pushing drive motor 917, the material pushing drive motor 917 rotates the drive ring 9116 relative to the walking device 910 around periphery of the holding assembly 911.

The walking device 910 further includes a transmission belt 918. Opposite ends of the transmission belt 918 are mounted to an output roller of the material pushing drive motor 917 and the drive ring 9116, so the drive ring 9116 is drivable and connected to the material pushing drive motor 917. Optionally, in other embodiments of the material pushing machine 9100, the output roller of the material pushing drive motor 917 includes a gear structure and the drive ring 9116 includes a gear structure, so the gear structure of the drive ring 9116 engages with the gear structure of the material pushing drive motor 917, thus the drive ring 9116 is drivable and connected to the material pushing drive motor 917.

Referring to FIGS. 12A to 17B, the material pushing device 920 further includes at least two pulley structures 922. Each pulley structure 922 includes a mounting body 9221 and a pulley body 9222 rotatably mounted on the mounting body 9221. The pulley structures 922 are maintained between the annular wall body 9211 and the holding assembly 911, the pulley structures 922 are mounted to the holding assembly 911 through the mounting body 9221 such that the pulley body 9222 resists the annular wall body 9211. When pushing the material, when the annular wall body 9211 is unilaterally stressed, each pulley structure 922 acts to prevent waggling and eccentric rotation of the annular wall body 9211, so as to prevent eccentricity and waggle of the material pushing machine 9100, and ensuring the reliability and stability of the material pushing machine 9100.

Preferably, the mounting body 9221 of each pulley structure 922 is mounted to a lower end of each support column 9112, so the pulley structures 922 resists the annular wall body 9211 at the lower end of the annular wall body 9211. When pushing the material, each pulley structure 922 prevents waggles and eccentric rotation of the annular wall body 9211.

Optionally, the annular wall body 9211 of each pulley structure 922 is mounted to the base plate 9111, so the pulley structures 922 may resist the annular wall body 9211 at the lower end of the annular wall body 9211. When the material pushing machine 9100 is pushing the material, when the annular wall body 9211 is unilaterally stressed, each pulley structure 922 may prevent waggles of the annular wall body 9211.

Preferably, a quantity of the pulley structures 922 and a quantity of the support columns 9112 is same, such as in the material pushing machine 9100 as shown in FIGS. 12A to 17B, the quantity of the pulley structures 922 and the quantity of the support columns 9112 are four, the lower end of each support column 9112 carries one pulley structure 922.

Referring to FIGS. 12A to 17B, the material pushing device 920 further includes a circular orbit 923. The circular orbit 923 is arranged on the annular wall body 9211 such that the circular orbit 923 seats to an internal wall of the annular wall body 9211, so the circular orbit 923 may strengthen the annular wall body 9211 to maintain a perfect roundness and circularity of the annular wall body 9211. The pulley body 9222 of each pulley structure 922 seats to a smooth surface of the circular orbit 923 to resist the annular wall body 9211. Thus, when the annular wall body 9211 is rotated relative to the holding assembly 911, the pulley body 9222 of each pulley structure 922 may roll on the smooth surface of the circular orbit 923, so as to reduce noise caused by friction between the pulley structures 922 and the circular orbit 923, thus the material pushing machine 9100 is more silent.

Referring to FIGS. 12A to 17B, the material pushing wall 921 includes at least two roller half bodies 9210. Each roller half body 9210 includes a roller wall 92101 and an extending arm 92102 extended from an upper end of the roller wall 92101. The roller walls 92101 of adjacent roller half bodies 9210 may be mounted to each other, after the roller half bodies 9210 are mounted, the roller wall 92101 of each roller half body 9210 forms the annular wall body 9211, the extending arm 92102 of each roller half body 9210 forms the connecting arm 9212.

Particularly, the material pushing wall 921 includes two roller half bodies 9210, one of the two roller half bodies 9210 is defined as first roller half body 9210a, the other of the two roller half bodies 9210 is defined as second roller half body 9210b. Each of the first roller half body 9210a and the second roller half body 9210b includes one roller wall 92101 and one extending arm 92102. The roller wall 92101 of the first roller half body 9210a and the roller wall 92101 of the second roller half body 9210b are mounted to each other to form the annular wall body 9211, the extending arm 92102 of the first roller half body 9210a and the extending arm 92102 of the second roller half body 9210b form the connecting arm 9212. Correspondingly, the circular orbit 923 includes a first circular orbit 923a and a second circular orbit 923b. The first circular orbit 923a is arranged on the roller wall 92101 of the first roller half body 9210a, the second circular orbit 923b is arranged on the roller wall 92101 of the second roller half body 9210b. After the roller wall 92101 of the first roller half body 9210a and the roller wall 92101 of the second roller half body 9210b are mounted to each other to form the annular wall body 9211, the first circular orbit 923a and the second circular orbit 923b form a complete circular orbit 923.

Referring to FIGS. 12A to 17B, the material pushing machine 9100 further includes a magnetic sensor 930. The magnetic sensor 930 is arranged on a lower portion of the base plate 9111. The magnetic sensor 930 is capable of communicating with magnetic navigation markers lying outside the fold yard, for guiding the walking device 910 to move along a path.

Referring to FIGS. 12A to 17B, the material pushing machine 9100 further includes a cover device 940. The cover device 940 includes a cover 941. A center position of the cover 941 is mounted to the free end 91150 of the mounting column 9115, so the cover 941 may be supported by the holding assembly 911. A periphery of the cover 941 extends outwardly, thus a diameter of the cover 941 is greater than the periphery of the annular wall body 9211, so the cover 941 protects and shields an upper portion of the annular wall body 9211.

The cover device 940 further includes a hold pole 942 and a distance sensor 943 arranged on an end of the hold pole 942. The other end of the hold pole 942 is arranged to the cover 941. The distance sensor 943 may obtain a distance between the material pushing machine 9100 and the fold yard for adjusting the distance between the material pushing machine 9100 and the fold yard when adjustment is required. Preferably, the hold pole 942 is rotatably mounted to the cover 941 for adjusting an angle between the hold pole 942 and the cover 941. For instance, when the material pushing machine 9100 is in operation, the hold pole 942 may rotate related to the cover 941, so the hold pole 942 and the cover 941 may have a greater angle, and so as to adjust the distance between the distance sensor 943 and the fold yard. Preferably, the hold pole 942 is an expansion pole, that is, a length of the hold pole 942 may be adjusted, thus, through adjusting the length of the hold pole 942 and the angle between the hold pole 942 and the cover 941, the distance between the distance sensor 943 and the fold yard may be adjusted conveniently and flexibly. Preferably, the cover 941 includes a maintain groove 9411 for receiving the hold pole 942.

Furthermore, the mounting column 9115 is a cylindrical or hollow mounting column, that is, the mounting column 9115 includes a connected channel 91151 for connecting the second receiving space 91102 and the external space of the upper holding platform 9114. Cables connected to the distance sensor 943 may be extended from the external space of the upper holding platform 9114 to the second receiving space 91102 through the connected channel 91151.

Referring to FIGS. 12A to 17B, the material pushing machine 9100 further includes charging port 950. The charging port 950 is arranged on the cover 941 and electrically connected to the power supply assembly 912, so the material pushing machine 9100 provides electric energy to the power supply assembly through the charging port 950. Preferably, cables connected to the charging port 950 may be extended from the external space of the upper holding platform 9114 to the second receiving space 91102 through the connected channel 91151, to be connected to the power supply assembly 912.

Referring to FIGS. 10 to 11B, the charger 9200 includes a charging adapter 960 and a charging assembly 970. The charging assembly 970 has a connecting end 971, a charging end 972 corresponding to the connecting end 971, and a pair of charging electrodes 973 arranged in the charging end 972. The connecting end 971 is movably mounted to the charging adapter 960, the charging assembly 970 can be driven to move the charging end 972 close to or away from the charging adapter 960. Preferably, the connecting end 971 is drivable and mounted to the charging adapter 960, so the charging adapter 960 can drive the charging assembly 970 to move the charging end 972 close to or away from the charging adapter 960. For instance, internal of the charging adapter 960 can be configured with a drive motor and a mounting channel, the connecting end 971 extends to an interior of the charging adapter 960 through the mounting channel and can be drivable and mounted to the drive motor. The drive motor can drive the connecting end 971, so the relative position of the charging assembly 970 and the charging adapter 960 can be changed, so the charging end 972 can move close to or away from the charging adapter 960.

When the material pushing machine 9100 needs to be charged, the charging adapter 960 of the charger 9200 can drive the charging assembly 970 to move the charging end 972 away from the charging adapter 960, so the charging end 972 closes to and be plugged to the charging port 950, the charging electrodes 973 electrically connects to the charging port 950, so the charging adapter 960 can provide electric energy to the power supply assembly 912. After the material pushing machine 9100 being charged, the charging adapter 960 can drive the charging assembly 970 to move the charging end 972 to be out of charging port 950 and close to the charging adapter 960.

Those skilled in the art should understand that the above description and the embodiments of the present disclosure shown in the drawings are only examples and do not limit the present disclosure. The purpose of the present disclosure has been completely and effectively achieved. The functions and structural principles of the present disclosure have been shown and explained in the embodiments. Without departing from the principles, the implementation of the present disclosure may have any deformation or modification.

## Claims

1. A material pushing management method comprising:
when a material pushing robot in an operating area needs to be charged with electric energy, obtaining at least one visual identifier in surrounding environment by at least one visual sensor, to generate a navigation instruction; and
based on the navigation instruction, controlling the material pushing robot to meet a charging device, to charge the material pushing robot by the charging device.

2. The material pushing management method according to claim 1, wherein controlling the material pushing robot to move towards the charging device along the navigation instruction to be positioned in a charging range of the charging device, the visual sensor is arranged on the material pushing robot and configured to obtain surrounding environment information in a moving direction of the material pushing robot in real time.

3. The material pushing management method according to claim 1, wherein controlling the charging device to move towards the material pushing robot along the navigation instruction to let the material pushing robot being positioned in a charging range of the charging device, the visual sensor is arranged on the charging device and configured to obtain surrounding environment information in a moving direction of the charging device in real time.

4. The material pushing management method according to claim 1, further comprising:
when the material pushing robot in the operating area needs to be charged with electric energy, obtaining a position of the material pushing robot; and
driving another material pushing robot to replace the previous material pushing robot for operating.

5. The material pushing management method according to any one of claims 1 to 4, wherein the visual identifier is identifier lines arranged on the ground.

6. The material pushing management method according to claim 2, wherein the generating the navigation instruction comprises:
the visual sensor arranged on the material pushing robot obtaining environment image data in the moving direction;
based on the environment image data, obtaining the visual identifier to generate a navigation path; and
calculating a lateral offset distance L between the material pushing robot and the navigation path and an angle of deflection θto generate the navigation instruction.

7. The material pushing management method according to claim 2, wherein the generating the navigation instruction comprises:
the visual sensor arranged on the material pushing robot obtaining environment image data in the moving direction;
based on the environment image data, obtaining the visual identifier;
calculating a lateral offset distance L between the material pushing robot and the visual identifier and an angle of deflection θ; and
based on the lateral offset distance L and the angle of deflection θ, obtaining a patrol moving turning angel β to generate the navigation instruction.

8. The material pushing management method according to claim 2, wherein when the visual sensor detects a stop identifier, the material pushing robot stops moving.

9. A material pushing robot chargable with electric energy by a charging device, the material pushing robot comprising:
a material pushing body; and
a charging navigation device, the charging navigation device comprising:
at least one visual sensor;
a processor; and
a controller, wherein the visual sensor is arranged on the material pushing body, the visual sensor is communicatively connected to the processor, the processor is communicatively connected to the controller, when the material pushing body needs to be charged with electric energy, the visual sensor obtains surrounding environment information in a moving direction of the material pushing body, the surrounding environment information comprises at least one visual identifier, the processor, based on the visual identifier obtained by the processor, generates a navigation instruction and transmits the navigation instruction to the controller, the controller, based on the navigation instruction, controls the material pushing body to navigate the material pushing body to the charging device.

10. The material pushing robot according to claim 9, wherein the visual sensor is arranged on a top portion of the material pushing body.

11. The material pushing robot according to any one of claims 9 or 10, wherein the visual sensor is rotatably arranged on the material pushing body.

12. The material pushing robot according to any one of claims 9 or 10, wherein the visual sensor is rotatably arranged on the material pushing body, the visual sensor is rotatable related to an X-axis, a Y-axis, or a Z-axis.

13. The material pushing robot according to any one of claims 9 or 10, wherein the material pushing robot further comprises a position sensor, the position sensor is communicatively connected to the processor, the position sensor is configured to obtain position information of the material pushing body, after the material pushing body finishes being charged with electric energy, based on the position information obtained by the position sensor, the controller controls the material pushing body to move to a previous position.

14. The material pushing robot according to any one of claims 9 or 10, wherein the material pushing body comprises a material pushing device and a moving device, the moving device is arranged on the material pushing device and adapted for driving the material pushing device, the visual sensor is arranged on the material pushing device.

15. A material pushing system comprising:
at least one material pushing robot;
at least one charging device; and
a management unit, wherein the management unit comprises a detection module, a processing module, and a control module, the processing module is communicatively connected to the detection module and the control module, each of the material pushing robot and the charging device is controllably connected to the management unit; when the material pushing robot needs to be charged with electric energy, the detection module detects surrounding environment information so as to obtain at least one visual identifier; the processing module, based on the visual identifier, generates a navigation instruction and transmits the navigation instruction to the control module; and the control module controls, based on the navigation instruction, controls the material pushing robot and the energy charging device to meet, so as to charge the material pushing robot with electric energy.

16. The material pushing system according to claim 15, wherein the detection module is arranged in the material pushing robot, the control module navigates the material pushing robot to move towards the charging device.

17. The material pushing system according to claim 15, wherein the detection module is arranged in the charging device, the control module navigates the charging device to move towards the material pushing robot.

18. The material pushing system according to claim 15, wherein when the present material pushing robot needs to be charged with electric energy, the control module of the management unit transmits an instruction to another material pushing robot, to replace the present material pushing robot by the another material pushing robot.

19. The material pushing system according to claim 15, wherein the management unit comprises a position obtaining module and a power obtaining module, each of the position obtaining module and the power obtaining module is communicatively connected to the processing module, the position obtaining module is configured to obtain a position of the material pushing robot and a position of the charging device, the power obtaining module is configured to obtain a remaining power of the material pushing robot, based on information obtain by the position obtaining module and the power obtaining module, the processing module determines a timing of moving towards the charging device.

20. The material pushing system according to claim 18, wherein the management unit comprises a search module, the search module is communicatively connected to the processing module, the search module is configured to, based on a predetermined condition, search other material pushing robots which are available around the material pushing robot.
